# DEMANDE DE BREVET EUROPEEN

(11) **EP 3 367 299 A1**
(43) Date de publication de la demande: **29.08.2018**
(21) Numéro de dépôt: 18156951.8
(22) Date de dépôt: 15.02.2018
(51) Int. Cl.: G06K 9/00, G06K 9/42, G06K 9/62

(54) **SYSTEME DE TRAITEMENT D'IMAGES**

(30) Priorité: 27.02.2017 FR 1751562
(71) Demandeur: Idemia Identity & Security France, 92130 Issy-les-Moulineaux (FR)
(72) Inventeur: LANNES, Sarah, 92130 Issy-Les-Moulineaux (FR); DESPIEGEL, Vincent, 92130 Issy-Les-Moulineaux (FR)
(74) Mandataire: Nony

(57) **Abrégé**

Système de traitement d'images (Ii, ... Iₙ), comportant un réseau de neurones principal (2) et en amont de celui-ci un module de prétraitement (3) comportant plusieurs réseaux de neurones (R₁,..., Rₙ) travaillant en parallèle pour traiter plusieurs images de départ d'un même objet et configuré pour générer par fusion des sorties de ces réseaux une représentation (D) de l'objet améliorant la performance du réseau de neurones principal, l'apprentissage des réseaux de neurones du module de prétraitement (3) étant effectué au moins en partie simultanément avec celui du réseau de neurones principal (2).

## Description

La présente invention concerne les systèmes de traitement d'images utilisant des réseaux de neurones, et plus particulièrement mais non exclusivement ceux destinés à la biométrie, notamment à la reconnaissance de visages.

L'invention s'intéresse plus particulièrement aux systèmes de traitement utilisant comme information de départ plusieurs images d'un même sujet, par exemple sous des angles de vue différents à un même instant ou à des instants différents, ces images étant par exemple extraites d'un flux vidéo, notamment de vidéo surveillance, ou d'une collection d'images, par exemple d'un même individu à des âges différents.

Il est connu de générer à partir d'une pluralité d'images de départ dans une certaine résolution des images dans une résolution supérieure, par une technique dite de « super-résolution ».

L'article Super-resolution from multiple views using learnt image models David Capel et al, Department of Engineering Science University of Oxford décrit ainsi des exemples de génération d'images de visages d'une résolution supérieure en utilisant des modèles d'images appris.

L'article Feature-domain super-resolution framework for Gabor-based face and iris recognition K Nguyen et al, Image and Video Research Lab, Queensland University of Technology, décrit l'utilisation de la super-résolution pour améliorer la performance de systèmes biométriques.

L'article Video Super-Resolution Using Classification ANN Ming-Hui Cheng et al International Scholarly and Scientific Research & Innovation 7(7) 2013 décrit l'utilisation de réseaux de neurones pour réaliser des images de résolution améliorée.

L'article de Junyu Wu et al, "Deep joint face hallucination and recognition", Cornell University Library, 24 novembre 2016, divulgue un système de reconnaissance de visages utilisant un réseau de neurones profond comprenant un sous-réseau pour obtenir des images en super-résolution, en cascade avec un sous-réseau pour la reconnaissance. Des calculs de gradient sont utilisés pour optimiser conjointement les paramètres des deux réseaux.

L'article de Xin Yu et al, "Face hallucination with tiny unaligned images by transformative discriminative neural networks", 4 février 2017, décrit un réseau de neurones transformatif et discriminant pour obtenir des représentations en super-résolution d'images non alignées ou très petites de visages, comprenant un réseau de sur-échantillonnage et un réseau discriminant.

Il est connu de l'article de Alex Greaves et al, "Multi-frame video super-resolution using convolutional neural networks", 23 mars 2016, pages 1-9, d'utiliser un réseau de neurones pour obtenir une version haute-résolution d'une trame d'une vidéo en prenant en compte l'information des pixels des trames adjacentes.

L'article de Frederick Wheeler et al, "Multi-frame super-resolution for face recognition", IEEE international conférence on biometrics: theory, applications, and systems, 2007, pages 1-6, décrit une méthode pour combiner des trames d'une séquence vidéo afin d'obtenir une image super-résolue pour améliorer la reconnaissance de visages. Un modèle de forme de visage est utilisé pour l'apprentissage et est ensuite appliqué au visage de chaque trame, plusieurs trames étant combinées en calculant une fonction de coût pour obtenir l'image super-résolue.

L'article de Chen Jun-Cheng et al, "Unconstrained face verification using deep CNN features", IEEE winter conférence on applications of computer vision, 2016, pages 1-9, divulgue un algorithme de vérification de visages non-contrainte utilisant des caractéristiques apprises et extraites d'un unique réseau de neurones profond à convolution. Lorsque plusieurs images d'une vidéo sont disponibles en entrée pour un même sujet, une moyenne des caractéristiques extraites est utilisée.

Il existe un besoin pour perfectionner encore les chaînes biométriques fondées sur des réseaux de neurones, notamment pour améliorer leurs performances de reconnaissance à partir d'un flux vidéo ou d'une collection d'images.

L'invention répond à ce besoin grâce, selon l'un de ses aspects, à un système de traitement d'images, comportant un réseau de neurones principal et en amont de celui-ci un module de prétraitement comportant plusieurs réseaux de neurones travaillant en parallèle pour traiter plusieurs images de départ d'un même objet, en particulier un visage, et configuré pour générer par fusion des sorties de ces réseaux une représentation de l'objet améliorant la performance du réseau de neurones principal, l'apprentissage des réseaux de neurones du module de prétraitement étant effectué au moins en partie simultanément avec celui du réseau de neurones principal.

Le fait d'entrainer le module de prétraitement avec le réseau de neurones principal permet d'avoir une correction parfaitement adaptée au besoin de l'analyse des descripteurs tels que déterminés par le réseau neuronal principal entrainé.

Les performances du système de traitement d'images s'en trouvent améliorées tout en permettant, contrairement à des solutions connues fondées sur un enrichissement des données d'apprentissage, de préserver la capacité des couches profondes du réseau principal pour l'apprentissage des descripteurs, en évitant de la consacrer à la compensation de problèmes de qualité d'image liés à leur faible résolution par exemple. Un réseau conventionnel plus puissant permettrait d'atteindre les mêmes performances, mais serait plus lent et plus coûteux, et mobiliserait plus de mémoire vive.

Les images de départ peuvent être diverses. Il s'agit par exemple d'images extraites d'un flux vidéo d'un même objet, par exemple d'un système de vidéo surveillance.

Il peut s'agir encore d'images extraites d'une collection d'images prises indépendamment d'un même objet, par exemple plusieurs photographies prises à un même instant mais sous des angles de vues différents.

Il peut s'agir encore d'une collection de photographies d'un individu à des âges différents, voire d'une collection de photographies et/ou de croquis d'un même individu, entre autres possibilités.

Le prétraitement réalisé par lesdits réseaux du module de prétraitement comporte de préférence un recalage des images, notamment un recalage 3D. En particulier, le module de prétraitement peut comporter des couches de réseaux de prétraitement configurées pour transformer les images de départ en des images frontales. En effet, les meilleures performances de reconnaissance biométrique sont généralement obtenues pour des images de face des individus.

De préférence, la représentation de l'objet comporte au moins un ensemble de paramètres décrivant la forme de l'objet, et notamment, dans le cas d'un visage, des paramètres de forme, d'expression et de texture.

La représentation de l'objet peut comporter une image de l'objet.

De préférence, la représentation de l'objet est de résolution supérieure, notamment pour au moins une partie de l'objet, à celle des images de départ. Une technique de super-résolution est ainsi mise en oeuvre.

Le module de prétraitement peut comporter au moins un premier étage de prétraitement par des couches de réseaux neuronaux permettant d'apprendre, avec échanges d'informations entre les réseaux, au moins un paramètre lié à l'objet, et au moins un deuxième étage de prétraitement par des couches de réseaux neuronaux recevant en entrée une image de départ correspondante ou une transformation de celle-ci et au moins ledit paramètre.

Le module de prétraitement peut être configuré pour générer par traitement des images de départ des données transformées avec une carte de confiance de ces données.

Le module de prétraitement peut comporter des réseaux de prétraitement générant des images de sortie et des cartes de confiance associées, et un réseau de fusion des images de sortie sur la base de ces images et cartes de confiance.

Le réseau principal peut être un réseau de classification.

Le traitement effectué par le module de prétraitement tient avantageusement compte, dans son apprentissage, de spécificités géométriques de l'objet, notamment d'une certaine symétrie, en particulier dans le cas d'un visage.

Les réseaux de neurones du module de prétraitement peuvent être des réseaux convolutifs, encore appelés réseaux CNN.

L'invention a encore pour objet, selon un autre de ses aspects, un procédé pour l'apprentissage d'un système selon l'invention, tel que défini plus haut, dans lequel au moins une partie de l'apprentissage des réseaux de neurones du module de prétraitement s'effectue simultanément à celui du réseau principal.

L'invention a encore pour objet, selon un autre de ses aspects, un procédé de traitement d'images, dans lequel les images sont traitées par un système selon l'invention, tel que défini plus haut.

L'invention a encore pour objet, selon un autre de ses aspects, un procédé de classification d'objets, notamment de visages, dans lequel on génère à l'aide d'un système selon l'invention des descripteurs des objets permettant leur classification, notamment en vue de la reconnaissance d'un visage.

L'invention pourra être mieux comprise à la lecture de la description qui va suivre, d'exemples de mise en oeuvre non limitatifs de l'invention, et à l'examen du dessin annexé, sur lequel :

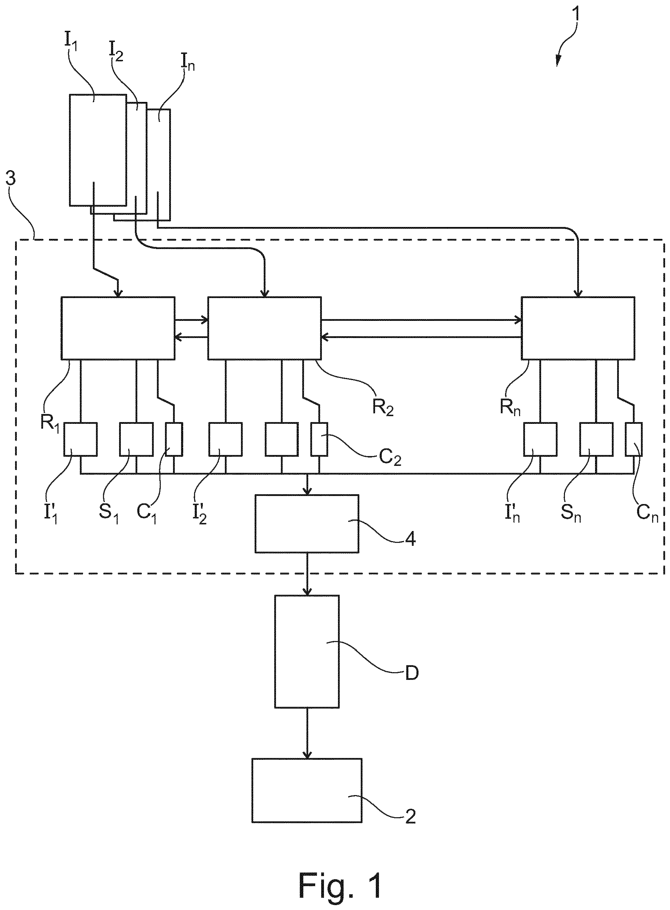

- La figure 1 est un schéma en blocs d'un exemple de système de traitement selon l'invention.

On a représenté à la figure 1 un exemple de système 1 de traitement d'images selon l'invention.

Ce système 1 comporte dans l'exemple considéré un réseau neuronal principal 2, qui est par exemple un réseau de classification, et un module de prétraitement 3 en amont de celui-ci. Le réseau de neurones 2 peut être de tout type, étant de préférence convolutif. Un exemple d'un tel réseau CNN est celui décrit sous la référence « LeNet » par Yann LeCun sur le site http://yann.lecun.com/exdb/lenet/

Le module 3 comporte plusieurs réseaux de neurones R₁, ..., Rₙ, par exemple convolutifs, travaillant en parallèle pour traiter plusieurs images de départ I₁, ... Iₙ d'un même objet, de préférence un visage.

Le module 3 est configuré pour générer par fusion des sorties des réseaux R₁, ..., Rₙ une représentation D de l'objet améliorant la performance du réseau de neurones principal 2.

La représentation D de l'objet comporte au moins un ensemble de paramètres S décrivant la forme de l'objet, notamment dans le cas d'un visage des paramètres S de forme, d'expression et de texture, et/ou une image I_{SR} de l'objet, de résolution supérieure à celle des images de départ, notamment pour au moins une partie de l'objet. La publication Blanz V, Vetter T. A morphable model for the synthesis of 3d faces. Proceedings of SIGGRAPH.1999:187-194 décrit des exemples de tels paramètres.

Les images de départ I₁, ... Iₙ peuvent être diverses. Il s'agit par exemple d'images de visages extraites d'un flux vidéo, par exemple d'un système de vidéo surveillance. Il peut s'agir encore d'images de visages extraites d'une collection d'images prises indépendamment, par exemple plusieurs photographies prises à un même instant mais sous des angles de vues différents. Il peut s'agir encore d'une collection de photographies d'un individu à des âges différents, voire d'une collection de photographies et/ou de croquis d'un même individu, entre autres possibilités.

Le prétraitement réalisé par le module de prétraitement 3 comporte de préférence un recalage 3D des images en vue de transformer les images de départ en des images frontales.

Les réseaux de prétraitement R₁, ..., Rₙ peuvent ainsi générer des images de sortie recalées Isi, ... I_{Sn} et/ou des jeux de paramètres de forme S associés, ainsi que des cartes de pondération de confiance C₁, ... Cₙ liées par exemple à la confiance que l'on a localement en ce recalage.

Le recalage peut s'effectuer comme décrit par exemple dans la publication Spatial Transformer Networks, Max Jadeberg, K Simonyan, A Zisserman, K Kavukcuoglu, NIPS 2015 par exemple.

Les paramètres de forme peuvent être extraits comme décrit dans la publication Estimating 3D Shape and Texture Using Pixel Intensity, Edges, Specular Highlights, Texture Constraints and a Prior. CVPR (2) 2005: 986-993 par exemple.

Le module 3 peut comporter, comme illustré, un réseau 4 de fusion des images de sortie I'₁, ... I'ₙ et/ou des cartes de paramètres S₁, ... Sₙ sur la base des cartes de confiance C₁, ... Cₙ pour générer la représentation D de l'objet utilisée par le réseau principal 2 en aval. Le réseau de fusion 4 peut être configuré pour réaliser une somme pondérée, entre autres possibilités.

Le traitement effectué par le module de prétraitement 3 tient avantageusement compte, dans son apprentissage, de spécificités géométriques de l'objet, notamment de la symétrie que l'on rencontre sur un visage et/ou la position approximative des yeux.

Conformément à l'invention, l'apprentissage des réseaux de neurones du module de prétraitement 3 est effectué au moins en partie simultanément avec celui du réseau de neurones principal 2. Les transformations effectuées par le module de prétraitement 3 étant différentiables, elles ne font pas obstacle au processus de rétro-propagation nécessaire à l'apprentissage de ces réseaux.

De préférence, on effectue l'apprentissage du recalage des images I₁, ... Iₙ par les réseaux R₁, ..., Rₙ dans un premier temps à l'aide d'une modélisation 3D de l'objet, sans effectuer simultanément l'apprentissage du réseau principal 2. On utilise par exemple des images de départ d'un même objet sous plusieurs angles de vues, générées par ordinateur. Puis, une fois que l'apprentissage du recalage est démarré, on effectue l'apprentissage simultané du module 3 et du réseau principal 2, afin d'affiner le recalage et l'opération de fusion des cartes de paramètres S₁, ... Sₙ et/ou des images de sortie I'₁, ... I'ₙ. Une telle façon de procéder peut réduire le risque d'instabilité dans l'apprentissage du recalage.

Le fait d'entrainer le module de prétraitement 3 avec le réseau de neurones principal 2 permet d'avoir une correction parfaitement adaptée au besoin de l'analyse des descripteurs tels que déterminés par le réseau neuronal principal 2.

L'apprentissage simultané permet d'optimiser le recalage et la représentation de l'objet pour accroître la précision du recalage et du gain en résolution par exemple, vis-à-vis des paramètres et zones qui comptent le plus pour la performance biométrique du réseau principal 2. Ainsi, certaines zones pourront être recalées de manière plus précise que d'autres.

L'invention n'est pas limitée à des applications de classification d'images et s'applique également à l'identification et à l'authentification en biométrie faciale.

Le système de traitement selon l'invention peut encore s'appliquer à la détection, à des biométries autres que celle du visage, par exemple celle de l'iris.

L'invention peut être mise en oeuvre sur tout type de matériel, par exemple ordinateur personnel, téléphone intelligent, carte dédiée, superordinateur.

## Revendications

1. Système de traitement d'images (I₁, ... Iₙ), comportant un réseau de neurones principal (2) et en amont de celui-ci un module de prétraitement (3) comportant plusieurs réseaux de neurones (R₁, ..., Rₙ ) travaillant en parallèle pour traiter plusieurs images de départ d'un même objet et configuré pour générer par fusion des sorties de ces réseaux une représentation (D) de l'objet améliorant la performance du réseau de neurones principal, l'apprentissage des réseaux de neurones du module de prétraitement (3) étant effectué au moins en partie simultanément avec celui du réseau de neurones principal (2).

2. Système selon la revendication 1, les images de départ étant extraites d'un flux vidéo ou étant extraites d'une collection d'images.

3. Système selon l'une des revendications 1 et 2, l'objet étant un visage.

4. Système selon l'une quelconque des revendications 1 à 3, le prétraitement réalisé par lesdits réseaux du module de prétraitement comportant un recalage des images, notamment un recalage 3D.

5. Système selon l'une quelconque des revendications précédentes, le module de prétraitement comportant des couches de réseaux de prétraitement configurées pour transformer les images de départ en des images frontales.

6. Système selon l'une quelconque des revendications précédentes, la représentation de l'objet comportant au moins un ensemble de paramètres décrivant la forme de l'objet, notamment dans le cas d'un visage des paramètres de forme, d'expression et de texture.

7. Système selon l'une quelconque des revendications 1 à 5, la représentation de l'objet comportant une image de l'objet.

8. Système selon l'une quelconque des revendications précédentes, la représentation de l'objet étant de résolution supérieure, notamment pour au moins une partie de l'objet, à celle des images de départ.

9. Système selon l'une quelconque des revendications précédentes, le module de prétraitement comportant au moins un premier étage de prétraitement par des couches de réseaux neuronaux permettant d'apprendre, avec échanges d'informations entre les réseaux, au moins un paramètre lié à l'objet, et au moins un deuxième étage de prétraitement par des couches de réseaux neuronaux recevant en entrée une image de départ correspondante ou une transformation de celle-ci et au moins ledit paramètre.

10. Système selon l'une quelconque des revendications précédentes, le module de prétraitement étant configuré pour générer par traitement des images de départ des données transformées avec une carte de confiance de ces données.

11. Système selon la revendication 10, le module de prétraitement comportant des réseaux de prétraitement générant des images de sortie et des cartes de confiance associées, et un réseau de fusion des images de sortie sur la base de ces images et cartes de confiance.

12. Système selon l'une quelconque des revendications précédentes, le réseau principal étant un réseau de classification.

13. Système selon l'une quelconque des revendications précédentes, le traitement effectué par le module de prétraitement tenant compte dans son apprentissage de spécificités géométriques de l'objet, notamment d'une certaine symétrie.

14. Procédé pour l'apprentissage d'un système selon l'une quelconque des revendications précédentes, dans lequel au moins une partie de l'apprentissage des réseaux de neurones du module de prétraitement s'effectue simultanément à celui du réseau principal.

15. Procédé de classification d'objets, notamment de visages, dans lequel on génère à l'aide d'un système selon l'une quelconque des revendications 1 à 13 des descripteurs des objets permettant leur classification, notamment en vue de la reconnaissance d'un visage.
